# EUROPÄISCHE PATENTANMELDUNG

(11) **EP 4 555 844 A1**
(43) Veröffentlichungstag der Anmeldung: **21.05.2025**
(21) Anmeldenummer: 24208775.7
(22) Anmeldetag: 24.10.2024
(51) Int. Cl.: A01B 69/08, B62D 13/00, B62D 13/02

(54) **LANDMASCHINE**

(30) Priorität: 09.11.2023 DE 102023131190
(71) Anmelder: KRONE Agriculture SE, 48480 Spelle (DE); Lemken GmbH & Co KG, 46519 Alpen (DE)
(72) Erfinder: Mählmann-Dunker, Hannes, 27251 Neuenkirchen (DE); Maesing, Stefan, 46325 Borken (DE)
(74) Vertreter: Engelmann, Kristiana

(57) **Zusammenfassung**

Die Erfindung betrifft eine Landmaschine (10), mit einem Rahmen (11), einer lenkbaren Vorderachse (14) und einer lenkbaren Hinterachse (15). Um bei einer gezogenen Landmaschine mit einfachen Mitteln eine situationsangepasste Lenkung zu realisieren, weist die Landmaschine erfindungsgemäß ein Auslöseelement (19) auf, das in Abhängigkeit von einer Vorderachsen-Auslenkung der Vorderachse (14) auslenkbar ist, sowie eine Übertragungseinrichtung (25) mit einem Auslöseteil (40) und einem Lenkteil (42), welcher zur Lenkung der Hinterachse (15) eingerichtet ist, wobei in einem Verzögerungslenkungsmodus der Landmaschine (10) das Auslöseelement (19) dazu eingerichtet ist, den Auslöseteil (40) zu beaufschlagen und wenigstens teilweise auszulenken, wenn ein Absolutbetrag der Vorderachsen-Auslenkung einen Schwellwert überschreitet, und die Übertragungseinrichtung (25) dazu eingerichtet ist, infolge der wenigstens teilweisen Auslenkung des Auslöseteils (40) und durch Kraftübertragung vom Auslöseteil (40) zum Lenkteil (42) die Hinterachse (15) entgegengesetzt zur Vorderachse (14) auszulenken.

## Beschreibung

Die vorliegende Erfindung betrifft eine Landmaschine nach dem Oberbegriff von Anspruch 1, ein Lenksystem für eine Landmaschine nach dem Oberbegriff von Anspruch 14 sowie ein Lenkverfahren nach dem Oberbegriff von Anspruch 15.

Bereits seit Langem sind zum einen Landmaschinen bekannt, die bei der Feldbearbeitung von einer Zugmaschine gezogen werden, sowie zum anderen selbstfahrende Landmaschinen, die bei der Feldbearbeitung von einem Fahrer gesteuert werden. Diese Maschinen können auch bei Überführungsfahrten oder Straßenfahrten, also auf dem Weg vom oder zum Feld, in gleicher Weise bewegt werden, also entweder von der Zugmaschine gezogen oder selbstfahrend durch den Fahrer gelenkt. Bei gezogenen Landmaschinen wird die Bremse vom Zugfahrzeug aus mit Energie versorgt und gesteuert. Soweit vorhanden, ist es auch möglich, eine oder mehrere lenkbare Achsen der gezogenen Landmaschine vom Zugfahrzeug aus zu lenken. Daneben kommen in zunehmendem Maße auch autonom arbeitende Landmaschinen zum Einsatz, die über einen eigenen Antrieb und eigene Lenkung verfügen und die Feldbearbeitung selbstständig, ohne Steuerkommandos eines Fahrers durchführen. Diese Fahrzeuge können eine Überführungsfahrt im Straßenverkehr nicht autonom durchführen, es ist also ein anderes Transportkonzept notwendig. Zum Beispiel kann die Landmaschine auf einen Tieflader verladen werden, was aufwändig ist und die Kosten für den gesamten Einsatz erhöht.

Eine mögliche Alternative besteht darin, die Landmaschine für eine Überführungsfahrt an ein Zugfahrzeug anzuhängen, ähnlich wie einen Anhänger. Da die autonome Landmaschine wenigstens eine lenkbare Achse aufweist, muss diese auch während der Überführungsfahrt gelenkt werden. Dies könnte durch Signalübertragung vom Zugfahrzeug erfolgen, wozu miteinander kompatible Kommunikationssystem in beiden Fahrzeugen notwendig wären. Je nach Hersteller, Modell und Produktionsjahr ist dies nicht immer gewährleistet. Alternativ kann die autonome Landmaschine gewissermaßen eigenständig lenken, wobei sich ihre Lenkung in gewissem Maße an den Fahrmanövern des Zugfahrzeugs orientieren muss. Dies kann durch ein Lenksystem erreicht werden, das über Sensoren die Position und Bewegungen des Zugfahrzeugs erfasst und hieraus Kommandos für Lenkaktoren der Landmaschine ableitet. Ein solches System kann allerdings unter Umständen aufwändig und kostenintensiv sein. Andererseits können über eine mechanische Kopplung Bewegungen des Zugfahrzeugs auf die Lenkung der Landmaschine übertragen werden. Dies ist zwar im Prinzip zuverlässig und kann kostengünstig realisiert werden. Allerdings ist bei einem solchen System kein angepasstes Lenkverhalten möglich. Dabei ist in einigen Situationen, zum Beispiel beim Rangieren in beschränktem Raum, ein stärkeres Lenken seitens der Landmaschine vorteilhaft, während in anderen Situationen, zum Beispiel bei einer Fahrt mit höherer Geschwindigkeit, ein geringeres Lenken zur Stabilisierung beiträgt.

Aufgabe der Erfindung ist es, bei einer gezogenen Landmaschine mit einfachen Mitteln eine situationsangepasste Lenkung zu realisieren.

Die Aufgabe wird gelöst mit einer Landmaschine mit den Merkmalen des unabhängigen Patentanspruchs 1. Vorteilhafte Ausführungsformen sind den abhängigen Ansprüchen entnehmbar.

Dafür wird eine Landmaschine geschaffen, mit einem Rahmen, einer lenkbaren Vorderachse, einer lenkbaren Hinterachse, einem Auslöseelement, das in Abhängigkeit von einer Vorderachsen-Auslenkung der Vorderachse auslenkbar ist, sowie einer Übertragungseinrichtung mit einem Auslöseteil und einem Lenkteil, welcher zur Lenkung der Hinterachse eingerichtet ist, wobei in einem Verzögerungslenkungsmodus der Landmaschine das Auslöseelement dazu eingerichtet ist, den Auslöseteil zu beaufschlagen und wenigstens teilweise auszulenken, wenn ein Absolutbetrag der Vorderachsen-Auslenkung einen Schwellwert überschreitet, und die Übertragungseinrichtung dazu eingerichtet ist, infolge der wenigstens teilweisen Auslenkung des Auslöseteils und durch Kraftübertragung vom Auslöseteil zum Lenkteil die Hinterachse entgegengesetzt zur Vorderachse auszulenken.

Die Landmaschine kann auch als landwirtschaftliche Arbeitsmaschine bezeichnet werden. Es kann sich insbesondere um eine Erntemaschine wie ein Feldhäcksler, ein Mähdrescher, eine Ballenpresse oder ein Ladewagen handeln. Es könnte sich aber auch zum Beispiel um einen Zetter, einen Pflug, einen Düngerstreuer, ein Güllefass oder dergleichen handeln. Die Landmaschine ist zur Feldbearbeitung eingerichtet, beispielsweise zum Pflügen, Düngen, Mähen, Zetten, zur Erntegutaufnahme oder dergleichen. Die Landmaschine kann zur Ankopplung verschiedener Anbaugeräte eingerichtet sein, wie zum Beispiel eines Pflugs, eines Zetters, eines Schneidwerks o.Ä. Dabei kann der eigentliche Fahrzeugkörper der Landmaschine unter Umständen für keine spezifische Feldbearbeitung eingerichtet sein. Er kann allerdings Ankopplungsstrukturen wie zum Beispiel ein Dreipunkt-Hubwerk aufweisen, über welches ein an die jeweilige Feldbearbeitung angepasstes Anbaugerät angekoppelt werden kann. Insofern ist die Landmaschine auch in diesem Fall zur Feldbearbeitung eingerichtet. Es kann sich bei der Landmaschine um einen Anhänger handeln, der bei der Feldbearbeitung von einer Zugmaschine gezogen wird. Bevorzugt weist die Landmaschine allerdings einen eigenen Fahrantrieb auf, der sie bei der Feldbearbeitung antreibt. Besonders bevorzugt ist die Landmaschine als autonomes Fahrzeug ausgebildet, welches dazu eingerichtet ist, eine Feldbearbeitung ohne Steuerkommandos eines Fahrers oder Bedieners durchzuführen. Es wäre allerdings auch denkbar, dass die Landmaschine einen Führungsstand oder eine Fahrerkabine aufweist und bedarfsweise von einem Fahrer gesteuert werden kann.

Die nachfolgend beschriebenen Komponenten können als Teile eines Lenksystems der Landmaschine angesehen werden. Der Rahmen ist in aller Regel starr ausgebildet, wobei er aus einer Mehrzahl starr verbundener Einzelelemente bestehen kann. Er bildet eine mechanisch stabile Basis, an welcher weitere Komponenten der Landmaschine und/oder des Lenksystems angeordnet sein können. Die Landmaschine weist wenigstens eine Vorderachse und eine Hinterachse auf, die beide lenkbar sind. Dies schließt die Möglichkeit ein, dass eine Mehrzahl von Vorderachsen und/oder eine Mehrzahl von Hinterachsen vorgesehen sind. Die genannten Achsen sind Teile eines Fahrwerks und sind bevorzugt direkt oder indirekt mit dem Rahmen verbunden. Die Begriffe "Vorderachse" und "Hinterachse" beziehen sich auf unterschiedliche Positionen bezüglich der Fahrtrichtung der Landmaschine, man könnte auch sagen, bezüglich einer Fahrzeuglängsachse. Genauer gesagt beziehen sie sich auf diejenige Fahrtrichtung, die für den Verzögerungslenkungsmodus der Landmaschine vorgesehen ist. Diese kann mit der Fahrtrichtung identisch sein, die für die Feldbearbeitung vorgesehen ist. Sie kann allerdings auch entgegengesetzt zu dieser ausgerichtet sein. Wie nachfolgend noch erläutert wird, ist bevorzugt vorgesehen, dass die Landmaschine im Verzögerungslenkungsmodus von einem Zugfahrzeug gezogen wird. Dabei wäre es denkbar, die für die Feldbearbeitung vorgesehene Fahrtrichtung beizubehalten, es wäre aber auch denkbar, die Landmaschine so rückwärts zu ziehen, dass die Vorderachse im Verzögerungslenkungsmodus die Hinterachse bei der Feldbearbeitung darstellt und umgekehrt. Jede der genannten Achsen weist bevorzugt zwei entlang einer Querachse der Landmaschine beabstandete Räder auf, wenngleich es nicht ausgeschlossen ist, dass zum Beispiel eine Achse nur ein Rad aufweist oder zwei Räder, die so dicht zusammenstehen, dass sie sich ähnlich einem einzigen Rad verhalten. Die jeweilige Achse ist lenkbar, was bedeutet, dass die Ausrichtung jedes Rades der Achse gegenüber dem Rahmen entsprechend einer Schwenkbewegung veränderbar ist. Prinzipiell könnten zwei Räder um eine gemeinsame Schwenkachse schwenkbar sein, entsprechend einer Drehschemellenkung. Es ist allerdings klar bevorzugt, dass jedes Rad um eine eigene Schwenkachse auslenkbar ist, wobei die jeweilige lenkbare Achse insbesondere eine Achsschenkellenkung aufweisen kann.

Das Auslöseelement ist in Abhängigkeit von einer Vorderachsen-Auslenkung der Vorderachse auslenkbar. Das heißt die Vorderachsen-Auslenkung beeinflusst die Auslenkung des Auslöseelements. Man kann auch sagen, dass eine Auslöseelement-Auslenkung des Auslöseelements kausal von der Vorderachsen-Auslenkung abhängt. Es ist dabei bevorzugt, dass ein eindeutiger Zusammenhang zwischen der Auslöseelement-Auslenkung und der Vorderachsen-Auslenkung besteht, so dass sich also ein bestimmter Wert der Auslöseelement-Auslenkung eindeutig einem bestimmten Wert der Vorderachsen-Auslenkung zuordnen lässt und umgekehrt. Bevorzugt entspricht die Vorderachsen-Auslenkung einem Vorderachsen-Lenkwinkel.

Allerdings können je nach Ausführungsform zwei Räder der Vorderachse parallel oder auch nicht-parallel zueinander ausgerichtet sein. In letzterem Fall lässt sich kein eindeutiger Lenkwinkel angeben, man kann aber beispielsweise den Mittelwert der Lenkwinkel der Räder als Vorderachsen-Lenkwinkel definieren. Die Vorderachsen-Auslenkung und insbesondere der Vorderachsen-Lenkwinkel sind dabei auf die Geradeausfahrt bezogen, welche einer Auslenkung von 0 und einem Lenkwinkel von 0° entspricht. Die Bezeichnung "Auslöseelement" ist rein funktional zu verstehen und bedeutet nicht, dass das Auslöseelement einteilig ausgebildet sein muss oder in sich starr ausgebildet sein muss. Es ist besonders bevorzugt, dass das Auslöseelement mechanisch an die Vorderachse gekoppelt ist, wobei der Begriff "mechanisch" in diesem Zusammenhang ausdrücklich auch "fluidmechanisch" einschließt. Eine fluidmechanische Kopplung kann pneumatisch oder insbesondere hydraulisch ausgebildet sein.

Die Übertragungseinrichtung weist einen Auslöseteil und einen Lenkteil auf. Wie noch erläutert wird, dient die Übertragungseinrichtung zur Übertragung einer Kraft und/oder einer Bewegung, wobei die Übertragung vom Auslöseteil zum Lenkteil erfolgt. Zusätzlich zum Auslöseteil und Lenkteil kann die Übertragungseinrichtung einen Mittelteil oder Zwischenteil aufweisen. Die Begriffe "Auslöseteil", "Lenkteil" sowie "Zwischenteil" sind funktional hinsichtlich des Übertragungsweges zu verstehen und implizieren keinerlei räumliche Anordnung. Jeder der genannten Teile kann eine oder mehrere Elemente aufweisen, die auch gegeneinander beweglich sein können. Es sind auch Ausführungsformen denkbar, in denen ein Element sich nicht eindeutig einem der Teile zuordnen lässt, sondern beispielsweise teilweise dem Auslöseteil und teilweise dem Lenkteil (oder dem Zwischenteil, soweit vorhanden) zugeordnet ist. Der Lenkteil ist zur Lenkung der Hinterachse eingerichtet, man kann auch sagen zur Auslenkung der Hinterachse. Analog zur Vorderachse kann man eine Hinterachsen-Auslenkung definieren, insbesondere einen Hinterachsen-Lenkwinkel. Durch den Lenkteil lässt sich die Hinterachsen-Auslenkung verändern. Es sind Ausführungsformen denkbar, in denen keine klare Abgrenzung zwischen dem Lenkteil und der Hinterachse möglich ist.

Der Verzögerungslenkungsmodus ist ein Modus der Landmaschine, in welchem eine Lenkbewegung der Hinterachse automatisch einer Lenkbewegung der Vorderachse folgt, allerdings erst wenn die Vorderachsen-Auslenkung einen Schwellwert überschreitet. Das heißt bei zunehmender Vorderachsen-Auslenkung tritt die entsprechende Kopplung der Hinterachsen-Auslenkung verzögert auf, was durch den Begriff "Verzögerungslenkung" verdeutlicht werden soll. Bevorzugt ist die Landmaschine noch für wenigstens einen weiteren Modus eingerichtet, der sich vom Verzögerungslenkungsmodus unterscheidet. Im Rahmen der Erfindung könnte die Landmaschine allerdings auch nur für den Verzögerungslenkungsmodus eingerichtet sein. Im Verzögerungslenkungsmodus der Landmaschine ist das Auslöseelement dazu eingerichtet, den Auslöseteil zu beaufschlagen und wenigstens teilweise auszulenken, wenn ein Absolutbetrag der Vorderachsen-Auslenkung einen Schwellwert überschreitet. Dabei bezeichnet "Beaufschlagen" ein mechanisches Beaufschlagen, also eine mechanische Einwirkung. Wenigstens während der Beaufschlagung besteht somit ein Kontakt zwischen dem Auslöseteil und dem Auslöseelement.

Die Beaufschlagung führt dazu, dass der Auslöseteil entweder insgesamt oder teilweise ausgelenkt wird. Dies kann sich insbesondere auf einer Auslenkung gegenüber dem Rahmen beziehen und/oder darauf, dass ein Element des Auslöseteils gegenüber einem anderen Element des Auslöseteils ausgelenkt wird. Die entsprechende Beaufschlagung und Auslenkung erfolgen, wenn der Absolutbetrag der Vorderachsen-Auslenkung einen Schwellwert überschreitet. In diesem Zusammenhang wird eine Vorderachsen-Auslenkung zu einer Seite (beispielsweise nach links) mit einem positiven Wert gekennzeichnet, während eine Vorderachsen-Auslenkung zur anderen Seite (beispielsweise nach rechts) mit einem negativen Wert gekennzeichnet wird. Die Beaufschlagung erfolgt somit unabhängig von der Seite, zu der die Vorderachsen-Auslenkung erfolgt, sie hängt nur vom Absolutbetrag der Auslenkung ab. Wie bereits erwähnt, kann die Vorderachsen-Auslenkung insbesondere einem Vorderachsen-Lenkwinkel entsprechen. In diesem Fall kann der Schwellwert insbesondere zwischen 2° und 20° liegen, bevorzugt zwischen 6° und 12°. Liegt der Absolutbetrag der Vorderachsen-Auslenkung unterhalb des Schwellwerts, erfolgt bevorzugt keine Beaufschlagung und/oder Auslenkung des Auslöseteils. Man kann sagen, dass eine (im Sinne der Erfindung relevante) Wechselwirkung zwischen dem Auslöseelement und dem Auslöseteil kausal an das Überschreiten des Schwellwerts gekoppelt ist.

Die Übertragungseinrichtung ist dazu eingerichtet, infolge der wenigstens teilweisen Auslenkung des Auslöseteils und durch Kraftübertragung vom Auslöseteil zum Lenkteil die Hinterachse entgegengesetzt zur Vorderachse auszulenken. Es erfolgt eine Kraftübertragung durch die Übertragungseinrichtung, was nicht dahingehend auszulegen ist, dass die Kraft unverändert bleiben muss. So kann die Kraft, mit welcher das Auslöseelement auf den Auslöseteil einwirkt, kleiner oder größer sein als die Kraft, mit welcher der Lenkteil auf die Hinterachse einwirkt. Die Kraftübertragung kann direkt vom Auslöseteil zum Lenkteil erfolgen oder indirekt über den oben genannten Zwischenteil. Es erfolgt auch eine Bewegungsübertragung, das heißt die wenigstens teilweise Auslenkung des Auslöseteils wird in eine wenigstens teilweise Auslenkung des Lenkteils umgesetzt. Dabei können sich die beiden Auslenkungen sowohl hinsichtlich der Richtung als auch hinsichtlich des Betrags unterscheiden, das heißt die Auslenkung am Lenkteil kann kleiner oder größer sein als am Auslöseteil. In jedem Fall erfolgt eine Kraftübertragung, was eine Form der mechanischen Kopplung zwischen dem Auslöseteil und dem Lenkteil impliziert, wobei der Begriff "mechanisch" wiederum ausdrücklich auch "fluidmechanisch" einschließt. Der Lenkteil lenkt die Hinterachse aus, was infolge der wenigstens teilweisen Auslenkung des Auslöseteils geschieht. Somit ist die Hinterachsen-Auslenkung kausal an die Auslenkung des Auslöseteils gekoppelt. Bevorzugt ist die Übertragungseinrichtung dazu eingerichtet, bei fehlender Beaufschlagung des Auslöseteils die Hinterachse in einer Neutralposition zu halten, welche einer Geradeausfahrt entspricht.

Es ist im Rahmen der Erfindung möglich, dass der Auslöseteil zur Auslenkung der Hinterachse einen zusätzlichen Aktor nutzt, der die übertragene Kraft nach Art eines Servomotors verstärkt. Bevorzugt allerdings erfolgt die Auslenkung der Hinterachse ausschließlich durch Kraftübertragung durch die Übertragungseinrichtung. Somit beruht die zur Auslenkung der Hinterachse notwendige Auslenkbarkeit auf Auslenkungsarbeit, die das Auslöseelement am Auslöseteil verrichtet. Die Auslenkung der Hinterachse ist entgegengesetzt zu Auslenkung der Vorderachse, wobei sich die Beträge der beiden Auslenkungen im Allgemeinen unterscheidet. In jedem Fall wird die Hinterachse nach links ausgelenkt, wenn die Vorderachse nach rechts ausgelenkt wird, und umgekehrt. Dies unterstützt das Fahren von engen Kurven und reduziert den Kurvenradius. Allerdings wird die Hinterachse nur bei einer stärkeren Auslenkung der Vorderachse mit ausgelenkt, und bleibt bei schwächerer Auslenkung der Vorderachse bevorzugt in einer Position, welche der Geradeausfahrt entspricht. Dies trägt dazu bei, die Landmaschine bei höheren Fahrtgeschwindigkeiten zu stabilisieren, bei welchen in der Praxis eher geringere Auslenkungen der Vorderachse typisch sind. Demgegenüber wird der Schwellwert (bei geeigneter Wahl desselben) nur bei geringeren Geschwindigkeiten realisiert, bei welchen die Stabilisierung des Fahrverhaltens eher nachrangig ist und stattdessen die Möglichkeit zu engeren Kurvenradien Vorteile bietet.

Da die erfindungsgemäße Verzögerungslenkung weder Sensoren zur Positionserfassung der Vorderachse noch Aktoren mit eigener Energieversorgung zur Auslenkung der Hinterachse benötigt, kann sie kostengünstig realisiert werden und ist unempfindlich gegen Störungen oder Energieausfälle. In diesem Sinne ist die Verzögerungslenkung komplett passiv realisierbar. Sie ermöglicht somit daher eine zuverlässige Anpassung des Lenkverhaltens an unterschiedliche Situationen, insbesondere an unterschiedliche Geschwindigkeiten und die hiermit verbundenen unterschiedlichen Kurvenradien.

Die Abhängigkeit der Hinterachsen-Auslenkung von der Vorderachsen-Auslenkung oberhalb des Schwellwerts kann unterschiedlich realisiert sein. Sie kann beispielsweise linear von der Vorderachsen-Auslenkung abhängen oder nicht-linear. In jedem Fall kann vorgesehen sein, dass bei einem konstruktiv bedingten Maximalwert der Vorderachsen-Auslenkung die Hinterachsen-Auslenkung betragsmäßig den gleichen Wert erreicht. Beispielsweise kann ein maximaler Hinterachsen-Lenkwinkel betragsmäßig einem maximalen Vorderachsen-Lenkwinkel entsprechen.

Wie bereits oben erwähnt wurde, ist der Verzögerungslenkungsmodus bevorzugt für eine Situation vorgesehen, in welcher die Landmaschine durch ein Zugfahrzeug gezogen wird. Dies kann insbesondere sinnvoll sein bei einer Straßenfahrt oder Überführungsfahrt einer Landmaschine, die im Rahmen einer Feldbearbeitung autonom arbeitet. Eine bevorzugte Ausgestaltung sieht vor, dass die Landmaschine ein gegenüber dem Rahmen um eine Deichselachse schwenkbares Deichselelement aufweist, das zur wenigstens indirekten Ankopplung an ein die Landmaschine ziehendes Zugfahrzeug und zur Übertragung einer Zugkraft eingerichtet ist, wobei die Vorderachse im Verzögerungslenkungsmodus durch das Deichselelement zwangsgelenkt ist. Das Zugfahrzeug kann selbst eine Landmaschine sein, es kann sich aber auch um ein anderes Fahrzeug handeln, zum Beispiel einen Lkw. Normalerweise ist das Zugfahrzeug ein Kraftfahrzeug mit eigenen Fahrantrieb, es könnte allerdings auch zum Beispiel ein Anhänger ohne eigenen Antrieb sein, der seinerseits gezogen wird. Es kann sich um ein Fahrzeug handeln, das durch einen Fahrer gelenkt wird oder um ein autonomes Fahrzeug. Das Deichselelement kann eine Deichsel bilden, welche an das Zugfahrzeug angekoppelt wird, einen Teil einer solchen Deichsel, oder es kann zur Verbindung mit einer solchen Deichsel ausgebildet sein. Es ist zur Übertragung der zwischen Zugfahrzeug und Landmaschine wirkenden Zugkraft eingerichtet, d. h. der Kraftfluss verläuft durch das Deichselelement. Es ist um eine Deichselachse gegenüber dem Rahmen schwenkbar, wobei die Deichselachse bevorzugt parallel zu einer Fahrzeughochachse verläuft. Wenn das Deichselelement direkt oder indirekt an das Zugfahrzeug angekoppelt ist, führen Lageveränderungen des Zugfahrzeugs, beispielsweise bei einer Kurvenfahrt, zu einer Schwenkbewegung des Deichselelements. Im Verzögerungslenkungsmodus ist die Vorderachse durch das Deichselelement zwangsgelenkt, d. h. die Auslenkung des Deichselelements um die Schwenkachse bestimmt die Vorderachsen-Auslenkung. Es ist hierzu ausdrücklich bevorzugt, dass das Deichselelement mechanisch an die Vorderachse gekoppelt ist. Eine derartige mechanische Kopplung kann wiederum ganz oder teilweise fluidmechanisch realisiert sein. Zum Beispiel kann das Deichselelement einen Hydraulikzylinder ansteuern, welcher wiederum hydraulisch mit dem Lenkzylinder der Vorderachse verbunden ist.

Das Deichselelement kann insbesondere Teil eines Verbindungssystems zur Verbindung der Landmaschine mit dem Zugfahrzeug sein. Das Verbindungssystem weist eine Deichseleinheit auf, die ein Abstützteil zur Abstützung am Zugfahrzeug aufweist sowie einen wenigstens indirekt mit dem Abstützteil verbundenen und gegenüber diesem um eine vordere Deichselachse schwenkbaren Deichselausleger, sowie das Deichselelement, dessen Deichselachse in diesem Zusammenhang auch als hintere Deichselachse bezeichnet werden kann. Dabei sind am Deichselausleger und am Deichselelement miteinander korrespondierende Kopplungselemente angeordnet, die dazu eingerichtet sind, in einer Arretierungsposition den Deichselausleger und das Deichselelement wenigstens translatorisch zu koppeln, wenn diese in einer Kopplungsposition zueinander angeordnet sind, wobei wenigstens ein Kopplungselement in eine Freigabeposition verstellbar ist, um den Deichselausleger vom Deichselelement zu lösen. Deichselausleger und Deichselelement sind translatorisch gekoppelt und bevorzugt translatorisch arretiert, das heißt gegen translatorische Verschiebungen gesichert. Die Verbindung kann allerdings wenigstens einen rotatorischen Freiheitsgrad aufweisen, insbesondere genau einen rotatorischen Freiheitsgrad.

Es kann insbesondere vorgesehen sein, dass wenigstens ein erstes Anschlag-Kopplungselement starr mit dem Deichselelement verbunden ist und wenigstens ein zweites Anschlag-Kopplungselement starr mit dem Deichselausleger verbunden ist und in der Kopplungsposition einen Formschluss mit dem wenigstens einemn ersten Kopplungselement bildet, wobei wenigstens ein Stell-Kopplungselement zwischen der Arretierungsposition und der Freigabeposition verstellbar ist. Ebenfalls kann wenigstens ein Stell-Kopplungselement verstellbar mit dem Deichselausleger verbunden sein und in der Arretierungsposition wenigstens ein erstes Anschlag-Kopplungselement zwischen einem Stell-Kopplungselement und einem zweiten Anschlag-Kopplungselement formschlüssig aufgenommen sein. Der Deichselausleger und das Deichselelement können vorteilhaft in einer wenigstens anteilig horizontalen Kopplungsrichtung in die Kopplungsposition führbar sein, wobei die Anschlag-Kopplungselemente in der Kopplungsposition wenigstens in Kopplungsrichtung einen Formschluss bilden. Das Verbindungssystem kann gegenüber dem Deichselausleger stationäre erste Führungsflächen und gegenüber dem Deichselelement stationäre zweite Führungsflächen aufweisen, welche zwischen sich einen Spielraum quer zur Kopplungsrichtung definieren, wobei wenigstens eine Führungsfläche wenigstens bereichsweise derart gegenüber der Kopplungsrichtung abgeschrägt ist, dass sich der Spielraum bei Annäherung an die Kopplungsposition verringert.

Am Deichselausleger kann ein Verriegelungsmechanismus angeordnet sein, welcher das wenigstens eine Stell-Kopplungselement aufweist und durch den das wenigstens eine Stell-Kopplungselement fernbedienbar ist. Der Verriegelungsmechanismus kann einen schwenkbar am Deichselausleger angeordneten Bedienhebel aufweisen, der im Abstand zum wenigstens einen Stell-Kopplungselement angeordnet und kraftübertragend mit diesem verbunden ist, insbesondere über wenigstens eine Koppelstange. Alternativ oder zusätzlich kann das wenigstens eine Stell-Kopplungselement durch den Verriegelungsmechanismus aktorisch verstellbar sein.

Wenigstens ein Stell-Kopplungselement kann als Rastelement ausgebildet sein, welches dazu eingerichtet ist, bei Annäherung an die Kopplungsposition entgegen einer Rückstellkraft elastisch aus der Verriegelungsposition ausgelenkt zu werden und bei Erreichen der Kopplungsposition der Rückstellkraft folgend in die Verriegelungsposition zurückzukehren.

Entsprechend einer Ausgestaltung ist der Deichselausleger um eine wenigstens anteilig horizontale Aufstellachse gegenüber dem Abstützteil schwenkbar zwischen einer Zugposition und einer Aufstellposition, wobei er bevorzugt aktorisch um die Aufstellachse schwenkbar ist. Der Deichselausleger kann außerdem bezüglich der vorderen Deichselachse relativ zum Abstützteil in einer Mittelposition arretierbar sein, wobei er bevorzugt aktorisch in die Mittelposition führbar und/oder aktorisch in der Mittelposition arretierbar ist. Die Deichseleinheit kann ein mit dem Abstützteil um die vordere Deichselachse schwenkbar verbundenes Schwenkteil aufweisen, mit welchem der Deichselausleger um die Aufstellachse schwenkbar verbunden ist.

Das Verbindungssystem kann wenigstens einen Überwachungssensor, insbesondere eine Kamera, aufweisen, welcher dazu eingerichtet ist, eine Annäherung an die Kopplungsposition zu überwachen. Weiterhin kann das Verbindungssystem wenigstens einen Kopplungssensor aufweisen, welcher dazu eingerichtet ist, das Erreichen der Arretierungsposition festzustellen und ein Arretierungssignal an eine Steuereinheit der Landmaschine zu senden. Die Steuereinheit der Landmaschine kann dazu eingerichtet sein, bei Empfang des Arretierungssignals in einen für eine Straßenfahrt vorgesehenen Modus zu wechseln, insbesondere in den Verzögerungslenkungsmodus. Es ist allerdings auch möglich, dass die Landmaschine bereits vor Empfang des Arretierungssignals in den entsprechenden Modus wechselt.

Eine Ausgestaltung der erfindungsgemäßen Landmaschine sieht vor, dass wenigstens die Vorderachse eine Achsschenkellenkung aufweist. Das heißt, die Räder der Vorderachse sind an Achsschenkeln gelagert, also an Radträgern, die einzeln gegenüber dem Rahmen schwenkbar sind. Die Achsschenkel können mit Lenkhebeln verbunden sein, die ihrerseits über eine Spurstange verbunden sind. Es sind auch Ausgestaltungen mit zwei getrennten Spurstangen denkbar. Gemäß einer Ausführungsform bildet eine durchgehende Spurstange eine Kolbenstange eines Lenkzylinders der Vorderachse oder die Spurstangen der beiden Achsschenkel sind mit der Kolbenstange verbunden. Der entsprechende Lenkzylinder kann im Verzögerungslenkungsmodus passiv geschaltet werden, um die Zwangslenkung der Vorderachse durch das oben genannte Deichselelement nicht zu stören. Auch die Hinterachse kann eine Achsschenkellenkung aufweisen. Auch in diesem Fall kann eine durchgehende Spurstange eine Kolbenstange eines Lenkzylinders der Hinterachse bilden, oder die Spurstangen können mit der Kolbenstange verbunden sein. Bevorzugt ist vorgesehen, dass das Deichselelement über eine Deichsel-Spurstange gelenkig mit einem Achsschenkel verbunden ist. Die Deichsel-Spurstange kann einerseits gelenkig mit dem Deichselelement und andererseits gelenkig mit dem Achsschenkel verbunden sein. Die Verbindung mit dem Achsschenkel kann auch über einen zwischengeordneten Lenkhebel gegeben sein. Sofern die beiden Achsschenkel über wenigstens eine weitere Spurstange, die als Vorderachsen-Spurstange bezeichnet werden kann, aneinander gekoppelt sind, ist eine Verbindung des Deichselelements mit einem Achsschenkel ausreichend. Je nach der Geometrie und Anordnung der beteiligten Elemente kann ein Auslenkungswinkel des Deichselelements kleiner, größer oder identisch zum Vorderachsen-Lenkwinkel sein.

Bevorzugt ist das Auslöseelement mit dem Deichselelement verbunden. Dies schließt die Möglichkeit einer beweglichen, beispielsweise gelenkigen Verbindung ein. Vorteilhaft ist das Auslöseelement allerdings starr mit dem Deichselelement verbunden. Das heißt, das Auslöseelement schwenkt in diesem Fall zusammen mit dem Deichselelement. Es ist auch möglich, dass keine klare Abgrenzung zwischen dem Auslöseelement und dem Deichselelement möglich ist, da diese beispielsweise wenigstens teilweise durch das gleiche Bauteil gebildet sein können.

Gemäß einer Ausführungsform ist in einem Einzellenkungsmodus der Landmaschine die Kraftübertragung vom Auslöseteil zum Lenkteil unterbrochen. Der Einzellenkungsmodus sieht vor, dass die Hinterachsen-Auslenkung grundsätzlich unabhängig von der Vorderachsen-Auslenkung ist. Das heißt, die im Verzögerungslenkungsmodus gegebene Kausalität über das Auslöseelement und die Übertragungsvorrichtung ist im Einzellenkungsmodus nicht geben. Bei dieser Ausführungsform wird dies dadurch erreicht, dass die Kraftübertragung innerhalb der Übertragungsvorrichtung unterbrochen wird. Das heißt, eine Beaufschlagung des Auslöseteils durch das Auslöseelement führt zu keiner Beeinflussung des Lenkteils oder der Hinterachse. Zusätzlich oder alternativ zu einer Unterbrechung der Kraftübertragung wäre es auch denkbar, Einstellung und/oder Anordnung des Auslöseelements und/oder des Auslöseteils im Einzellenkungsmodus so anzupassen, dass es zu keiner Beaufschlagung mehr kommt, wenn die Vorderachsen-Auslenkung den Schwellwert überschreitet. Der Einzellenkungsmodus kann insbesondere bei einer autonomen Landmaschine während der Feldbearbeitung vorgesehen sein, wobei die Vorderachse und die Hinterachse im Allgemeinen unabhängig voneinander situationsbedingt ausgelenkt werden. Dabei kann eine Steuereinheit der Landmaschine beispielsweise die Einstellung der oben genannten Lenkzylinder von Vorderachse und Hinterachse kontrollieren.

Eine Ausgestaltung sieht vor, dass der Auslöseteil wenigstens einen Auslösezylinder aufweist und der Lenkteil wenigstens einen Lenkzylinder aufweist, wobei jeder Zylinder einen Zylinderkörper zur Aufnahme eines Arbeitsfluids aufweist sowie ein demgegenüber verschiebbares Kolbenelement, und wobei im Verzögerungslenkungsmodus wenigstens ein Auslösezylinder fluidisch an wenigstens einen Lenkzylinder gekoppelt ist. Das Kolbenelement ist wenigstens teilweise innerhalb des Zylinderkörpers angeordnet und dazu eingerichtet, das im Zylinderkörper aufgenommene Arbeitsfluid durch Verschiebung zu verdrängen und/oder durch in den Zylinderkörper einströmendes Arbeitsfluid verschoben zu werden. Innerhalb des Zylinderkörpers können ein oder mehrere Kammern definiert sein, die teilweise durch das Kolbenelement definiert sind und deren Volumen sich dementsprechend in Abhängigkeit von der Position des Kolbenelements ändert. Im Verzögerungslenkungsmodus ist wenigstens ein Auslösezylinder fluidisch an wenigstens einen Lenkzylinder gekoppelt, das heißt Arbeitsfluid kann zwischen den beiden Zylindern ausgetauscht werden. Wenn beispielsweise Arbeitsfluid aus dem Auslösezylinder verdrängt wird, strömt es in den Lenkzylinder ein und umgekehrt. Somit kann die Bewegung des Kolbenelements des einen Zylinders eine Bewegung des Kolbenelements des anderen Zylinders hervorrufen. Die fluidische Verbindung bildet dabei die Basis der Kraftübertragung zwischen dem Auslöseteil und dem Lenkteil. Bevorzugt sind der wenigstens eine Auslösezylinder und der wenigstens eine Lenkzylinder im Einzellenkungsmodus fluidisch getrennt. Die entsprechende Änderung kann durch ein Umschalten einer Ventilanordnung erfolgen, welche die Übertragungseinrichtung aufweist. Die Ventilanordnung weist wenigstens ein Ventil auf, gegebenenfalls eine Mehrzahl von Ventilen. Zusätzlich oder alternativ ist es möglich, dass der wenigstens eine Auslösezylinder im Einzellenkungsmodus derart verstellt ist, dass er nicht durch das Auslöseelement beaufschlagbar ist. Zum Beispiel kann der Auslösezylinder hierzu verschwenkt werden.

Es sind Ausführungsformen denkbar, in denen wenigstens ein Zylinder als Pneumatikzylinder ausgebildet ist. Die Kompressibilität eines gasförmigen Arbeitsfluids könnte allerdings dazu führen, dass eine Auslenkung eines Auslösezylinders nicht präzise und verzögerungsfrei an einen Lenkzylinder weitergegeben werden kann. Das heißt, das Lenkverhalten der Hinterachse könnte weniger berechenbar sein. U.a. aus diesem Grund ist es bevorzugt, dass die Zylinder als Hydraulikzylinder ausgebildet sind. Das heißt, das oben genannte Arbeitsfluid ist eine Hydraulikflüssigkeit.

Eine Ausgestaltung sieht vor, dass das Auslöseelement wenigstens einen Auslösefinger aufweist, der dazu eingerichtet ist, das Kolbenelement eines Auslösezylinders zu beaufschlagen und zu verschieben. Das heißt durch die Einwirkung des Auslösefingers ist das Kolbenelement des Auslösezylinders, welches als Auslösezylinder-Kolbenelement bezeichnet werden kann, gegenüber dem Zylinderkörper verschiebbar. Der Begriff "Auslösefinger" ist im Hinblick auf die Form und Größe des genannten Elements nicht einschränkend auszulegen. Allerdings kann der Auslösefinger wenigstens bereichsweise langgestreckt ausgebildet sein und/oder sich im Querschnitt verjüngen, um das Kolbenelement optimal und präzise zu erreichen. Es versteht sich, dass für jeden Auslösezylinder ein eigener Auslösefinger vorgesehen sein kann. Beispielsweise kann das Auslöseelement zwei Auslösefinger aufweisen, die sich in unterschiedliche Richtungen erstrecken, um die Kolbenelemente von zwei Auslösezylindern zu beaufschlagen. Derartige Auslösefinger können sich beiderseits vom Deichselelement erstrecken und mit diesem zusammen eine T-förmige Struktur bilden. Da sich bei einer starren Verbindung mit dem Deichselelement der jeweilige Auslösefinger nicht geradlinig, sondern bogenförmig bewegt, ist es bevorzugt, dass der zugehörige Auslösezylinder gegenüber dem Rahmen schwenkbar gelagert ist. Auf diese Weise kann sich die Ausrichtung des Auslösezylinders an die Bewegung des Auslösefingers anpassen.

Es sind Ausführungsformen denkbar, bei denen der Auslöseteil durch einen einzigen Auslösezylinder realisiert ist. Eine andere Ausführungsform sieht vor, dass der Auslöseteil zwei Auslösezylinder aufweist, wobei das Auslöseelement dazu eingerichtet ist, in Abhängigkeit von einer Auslenkungsrichtung der Vorderachse jeweils einen Auslösezylinder zu beaufschlagen. Das heißt, wenn die Vorderachse in eine Richtung ausgelenkt wird (zum Beispiel entsprechend einer positiven Vorderachsen-Auslenkung), beaufschlagt das Auslöseelement den einen Auslösezylinder, und wenn die Vorderachse in Gegenrichtung ausgelenkt wird (zum Beispiel entsprechend einer negativen Vorderachsen-Auslenkung), beaufschlagt das Auslöseelement den anderen Auslösezylinder, jeweils unter der Voraussetzung, dass der Absolutwert der Vorderachsen-Auslenkung den Schwellwert überschreitet. Wenngleich eine unterschiedliche Bauart der beiden Auslösezylinder möglich ist, ist es bevorzugt, dass sie gleichartig oder spiegelsymmetrisch zueinander ausgebildet sind. Auch ihre Anordnung zueinander kann spiegelsymmetrisch sein, insbesondere zu einer senkrechten Mittelebene der Landmaschine. Insbesondere kann bei dieser Ausführungsform vorgesehen sein, dass das Auslöseelement zwei Auslösefinger aufweist, von denen jeder einem der beiden Auslösezylinder zugeordnet ist.

Hinsichtlich des Aufbaus des jeweiligen Auslösezylinders bestehen unterschiedliche Möglichkeiten. Bevorzugt weist wenigstens ein Auslösezylinder eine im Zylinderkörper angeordnete Trennwand auf sowie ein Kolbenelement mit einem ersten Auslösezylinder-Kolbenteil und einem zweiten Auslösezylinder-Kolbenteil, welche über eine durch die Trennwand geführte Auslösezylinder-Kolbenstange verbunden sind, wobei eine erste Auslösezylinder-Kammer zwischen dem ersten Auslösezylinder-Kolbenteil und der Trennwand definiert ist und eine zweite Auslösezylinder-Kammer zwischen der Trennwand und dem zweiten Auslösezylinder-Kolbenteil definiert ist und im Verzögerungslenkungsmodus beide Auslösezylinder-Kammern jeweils fluidisch mit einem Lenkzylinder verbunden sind. Das Kolbenelement des entsprechenden Auslösezylinders weist also somit wenigstens drei miteinander verbundene Elemente auf, nämlich die beiden Auslösezylinder-Kolbenteile und die Auslösezylinder-Kolbenstange, die diese verbindet. Die Auslösezylinder-Kolbenstange kann dabei durch wenigstens ein Kolbenteil hindurchgeführt sein und sich auf der vom anderen Kolbenteil abgewandten Seite weiter erstrecken. Auch ist es möglich, dass die Kolbenstange aus mehreren Teilen besteht, die nicht unmittelbar verbunden sind, sondern nur über eines der Kolbenteile. Die Kolbenteile weisen einen Querschnitt auf, der an den Innenquerschnitt des Zylinderkörpers angepasst ist, so dass sie diesen praktisch fluiddicht unterteilen. Außerdem ist das Innere des Zylinderkörpers durch die Trennwand unterteilt. Die erste Auslösezylinder-Kammer ist zwischen dem ersten Auslösezylinder-Kolbenteil definiert und die zweite Auslösezylinder-Kammer zwischen dem zweiten Auslösezylinder-Kolbenteil und der Trennwand. Aufgrund der Verbindung der Kolbenteile über die Kolbenstange bleibt ihr Abstand zueinander gleich, so dass bei einer Verschiebung des Kolbenelements entweder das Volumen der ersten Auslösezylinder-Kammer zunimmt, während im gleichen Maße das Volumen der zweiten Auslösezylinder-Kammer abnimmt, oder umgekehrt. Dementsprechend muss, sofern die Kompressibilität des Arbeitsfluids vernachlässigt werden kann, Arbeitsfluid in die eine Kammer einströmen, wenn Arbeitsfluid aus der anderen Kammer verdrängt wird. Insbesondere kann vorgesehen sein, dass bei Überschreiten des Schwellwerts das Auslöseelement auf Seiten des ersten Auslösezylinder-Kolbenteils auf das Kolbenelement einwirkt. Insbesondere kann ein oben genannter Auslösefinger dort einwirken. Die Einwirkung kann indirekt oder auch direkt auf das erste Auslösezylinder-Kolbenteil erfolgen. Im Verzögerungslenkungsmodus sind beide Auslösezylinder-Kammern mit einem Lenkzylinder verbunden. Demgegenüber ist es bevorzugt, dass im Einzellenkungsmodus die erste und die zweite Auslösezylinder-Kammer vom Lenkzylinder fluidisch getrennt und - unter Umgehung des Lenkzylinders - miteinander fluidisch verbunden sind. Dementsprechend kann im Einzellenkungsmodus Arbeitsfluid frei zwischen den Kammern verschoben werden.

Es ist wünschenswert, dass die Hinterachse in ihre Neutralposition zurückgestellt wird, wenn keine Beaufschlagung eines Auslösezylinders durch das Auslöseelement erfolgt. Diese Rückstellung kann in unterschiedlicher Weise bewerkstelligt werden, insbesondere über eine aktive Rückstellung des jeweiligen Auslösezylinders. Gemäß einer bevorzugten Ausführungsform weist wenigstens ein Auslösezylinder eine dritte Auslösezylinder-Kammer auf, die zwischen dem zweiten Auslösezylinder-Kolbenteil und einer Endwand des Zylinderkörpers definiert ist und die im Verzögerungslenkungsmodus mit einem Druckspeicher kommuniziert, wodurch der Auslösezylinder in eine Grundposition rückstellbar ist. Bei dieser Ausführungsform ist das zweite Auslösezylinder-Kolbenteil in einem Bereich zwischen der Zwischenwand und der Endwand angeordnet und kann sich zwischen diesen Wänden bewegen. Das Volumen der dritten Auslösezylinder-Kammer nimmt ab, wenn das Volumen der zweiten Auslösezylinder-Kammer zunimmt und umgekehrt. Die dritte Auslösezylinder-Kammer kommuniziert im Verzögerungslenkungsmodus mit einem Druckspeicher, so dass sie mit druckbeaufschlagtem Arbeitsfluid gefüllt ist. Prinzipiell könnte hier ein anderes Arbeitsfluid als in der ersten und zweiten Auslösezylinder-Kammer eingesetzt werden, bevorzugt handelt es sich allerdings um dasselbe Arbeitsfluid. Der Druckspeicher kann die dritte Auslösezylinder-Kammer mit einem wenigstens annähernd gleichbleibenden Druck beaufschlagen. Dieser ist bestrebt, die erste und die dritte Auslösezylinder-Kammer zu expandieren und die zweite Auslösezylinder-Kammer zu komprimieren. Sofern beispielsweise seitens des Auslöseelements keine äußere Kraft auf das Kolbenelement wirkt, kann das zweite Auslösezylinder-Kolbenteil gegebenenfalls vollständig bis zur Zwischenwand geschoben werden. Die sich hierdurch ergebende Stellung des Kolbenelements des Auslösezylinders wird als Grundposition des Auslösezylinders und/oder des Kolbenelements bezeichnet. Im Einzellenkungsmodus ist es bevorzugt, dass die dritte Auslösezylinder-Kammer drucklos gehalten ist. Sie kann beispielsweise mit einem drucklosen Tank verbunden sein. Dementsprechend erzeugt das in ihr enthaltene Arbeitsfluid nur eine geringfügige Gegenkraft, wenn das Kolbenelement bewegt wird. Bevorzugt entspricht die Grundposition beider Auslösezylinder der Neutralposition der Hinterachse und/oder des Lenkzylinders der Hinterachse. Das heißt, die Übertragungseinrichtung ist bevorzugt dazu eingerichtet, den Lenkzylinder in eine einer Geradeausfahrt entsprechende Neutralposition zu stellen, wenn beide Auslösezylinder in der Grundposition sind. Anders ausgedrückt, der Lenkzylinder ist bevorzugt durch Einstellen der Grundposition beider Auslösezylinder in die Neutralposition stellbar.

Bevorzugt weist der Lenkteil einen Lenkzylinder auf mit einer ersten Lenkzylinder-Kammer und einer zweiten Lenkzylinder-Kammer, die von der ersten Lenkzylinder-Kammer durch ein Lenkzylinder-Kolbenteil getrennt ist, welches mit einer Lenkzylinder-Kolbenstange verbunden ist, durch deren Auslenkung die Hinterachse auslenkbar ist. Die beiden genannten Lenkzylinder-Kammern sind innerhalb des Zylinderkörpers des Lenkzylinders definiert. Sie sind durch das Lenkzylinder-Kolbenteil getrennt, welches zum Kolbenelement des Lenkzylinders gehört. Durch Verschiebung des Kolbenelements wird somit das Volumen der einen Lenkzylinder-Kammer vergrößert, während sich parallel hierzu das Volumen der anderen Lenkzylinder-Kammer verringert. Endseitig können wiederum Endwände des Zylinderkörpers vorgesehen sein. Die Lenkzylinder-Kolbenstange ist mit dem Lenkzylinder-Kolbenteil verbunden. Sie kann durch eine Endwand, bevorzugt durch beide Endwände, hindurchgeführt sein. Dementsprechend erstreckt sie sich aus dem Zylinderkörper heraus nach außen. Sie kann beispielsweise als Spurstange Teil einer Achsschenkellenkung der Hinterachse sein, oder sie kann beiderseits mit Spurstangen verbunden sein. In jedem Fall ist sie dazu eingerichtet, die Hinterachse auszulenken. Es ist sehr bevorzugt, dass der Lenkzylinder als Gleichlaufzylinder ausgebildet ist, womit der Querschnitt der ersten Lenkzylinder-Kammer gleich dem Querschnitt der zweiten Lenkzylinder-Kammer ist. Somit expandiert eine Kammer genau dann, wenn der Fluiddruck in ihr größer ist als der Fluiddruck in der anderen Kammer. In jedem Fall kann durch Druckerhöhung in einer der Lenkzylinder-Kammern das Kolbenelement ausgelenkt werden, so dass durch die Kolbenstange eine Auslenkung der Hinterachse erfolgt.

Bevorzugt ist vorgesehen, dass im Verzögerungslenkungsmodus die erste Auslösezylinder-Kammer eines Auslösezylinders und die zweite Auslösezylinder-Kammer des anderen Auslösezylinders fluidisch mit der ersten Lenkzylinder-Kammer verbunden sind, und die zweite Auslösezylinder-Kammer des einen Auslösezylinders und die erste Auslösezylinder-Kammer des anderen Auslösezylinders fluidisch mit der zweiten Lenkzylinder-Kammer verbunden sind. Die Verbindungen sind dabei selbstverständlich so gewählt, dass sich ein Lenkverhalten ergibt, bei welchem die Hinterachse entgegengesetzt zur Vorderachse ausgelenkt wird. Bei dieser Ausführungsform bilden jeweils zwei Auslösezylinder-Kammern, welche zu unterschiedlichen Auslösezylinder gehören, und eine Lenkzylinder-Kammer ein fluidisch untereinander verbundenes Teilsystem. Wenn das Auslöseelement das entsprechende Auslösezylinder-Kolbenelement beaufschlagt, wird der Fluiddruck in diesem Teilsystem erhöht und übersteigt den Fluiddruck im jeweils anderen Teilsystem. Somit erfolgt eine Auslenkung des Lenkzylinder-Kolbenelements, aus welcher eine Auslenkung der Hinterachse resultiert.

Die Aufgabe wird weiterhin gelöst durch ein Lenksystem für eine Landmaschine, mit einem Rahmen, einer lenkbaren Vorderachse, einer lenkbaren Hinterachse, einem Auslöseelement, das in Abhängigkeit von einer Vorderachsen-Auslenkung der Vorderachse auslenkbar ist, sowie einer Übertragungseinrichtung mit einem Auslöseteil und einem Lenkteil, welcher zur Lenkung der Hinterachse eingerichtet ist, wobei in einem Verzögerungslenkungsmodus der Landmaschine das Auslöseelement dazu eingerichtet ist, den Auslöseteil zu beaufschlagen und wenigstens teilweise auszulenken, wenn ein Absolutbetrag der Vorderachsen-Auslenkung einen Schwellwert überschreitet, und die Übertragungseinrichtung dazu eingerichtet ist, infolge der wenigstens teilweisen Auslenkung des Auslöseteils und durch Kraftübertragung vom Auslöseteil zum Lenkteil die Hinterachse entgegengesetzt zur Vorderachse auszulenken.

Die genannten Begriffe wurden bereits mit Bezug auf die erfindungsgemäße Landmaschine erläutert und werden daher nicht nochmals erklärt. Bevorzugte Ausgestaltungen des Lenksystems entsprechen denen der erfindungsgemäßen Landmaschine.

Die Aufgabe wird auch gelöst durch ein Verfahren zum Lenken einer Landmaschine, mit einem Rahmen, einer lenkbaren Vorderachse, einer lenkbaren Hinterachse, einem Auslöseelement, das in Abhängigkeit von einer Vorderachsen-Auslenkung der Vorderachse auslenkbar ist, sowie einer Übertragungseinrichtung mit einem Auslöseteil und einem Lenkteil, welcher zur Lenkung der Hinterachse eingerichtet ist, wobei in einem Verzögerungslenkungsmodus der Landmaschine das Auslöseelement den Auslöseteil beaufschlagt und wenigstens teilweise auslenkt, wenn ein Absolutbetrag der Vorderachsen-Auslenkung einen Schwellwert überschreitet, und die Übertragungseinrichtung infolge der wenigstens teilweisen Auslenkung des Auslöseteils und durch Kraftübertragung vom Auslöseteil zum Lenkteil die Hinterachse entgegengesetzt zur Vorderachse auslenkt.

Die genannten Begriffe wurden bereits mit Bezug auf die erfindungsgemäße Landmaschine erläutert und werden daher nicht nochmals erklärt. Bevorzugte Ausgestaltungen des Verfahrens entsprechen denen der erfindungsgemäßen Landmaschine.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Untersicht einer erfindungsgemäßen Landmaschine mit Teilen eines Verbindungssystems in einem ersten Zustand;
- Fig. 2: eine Untersicht der Landmaschine mit Teilen des Verbindungssystems in einem zweiten Zustand;
- Fig. 3: ein Diagramm einer Übertragungseinrichtung der Landmaschine aus Fig. 1 in einem Verzögerungslenkungsmodus;
- Fig. 4: ein Diagramm der Übertragungseinrichtung aus Fig. 3 in einem Einzellenkungsmodus;
- Fig. 5: eine Seitenansicht eines Teils der Landmaschine aus Fig. 1, eines Zugfahrzeugs sowie des diese verbindenden Verbindungssystems;
- Fig. 6: eine perspektivische Detailansicht des Verbindungssystems aus Fig. 5;
- Fig. 7: eine perspektivische Ansicht des Verbindungssystems aus Fig. 5 in einem ersten Zustand; sowie
- Fig. 8: eine perspektivische Ansicht des Verbindungssystems aus Fig. 5 in einem zweiten Zustand.

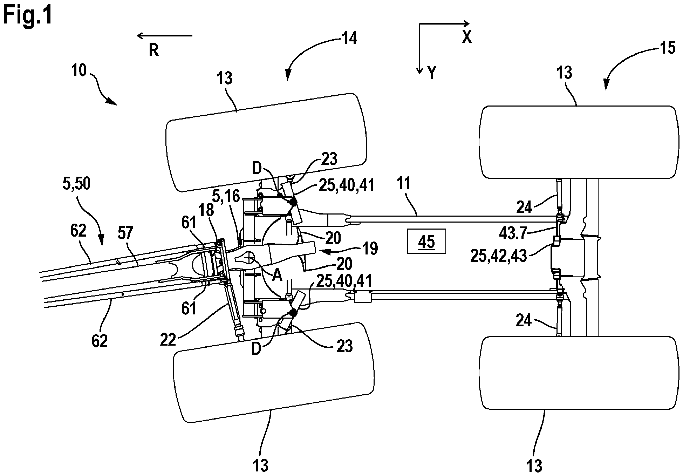

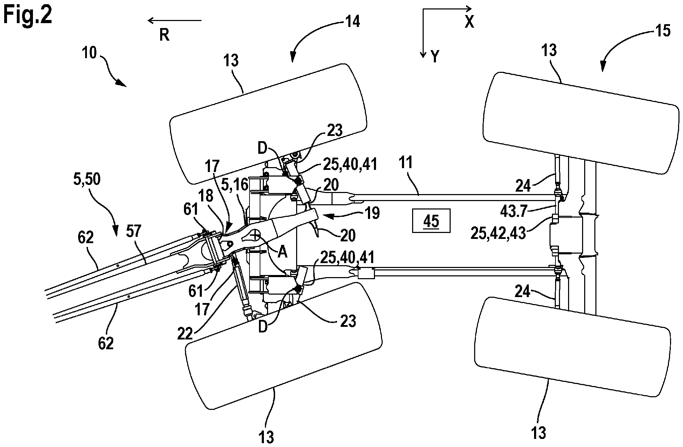

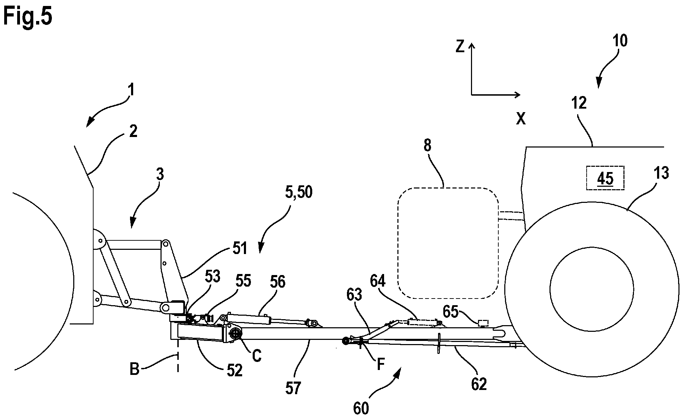

Fig. 1 und 2 zeigen Untersichten einer Landmaschine 10, welche in diesem Beispiel als autonomes Fahrzeug ausgebildet ist. Hier und im Folgenden sind eine Längsachse X, eine Querachse Y sowie eine Hochachse Z der Landmaschine 10 eingezeichnet, ebenso wie eine entgegengesetzt zur Längsachse X weisende Fahrtrichtung R. Zur Vereinfachung wurden verschiedene Teile der Landmaschine 10 weggelassen, insbesondere der Großteil eines Fahrzeugkörpers 12, welcher in Fig. 5 angedeutet ist. Erkennbar ist ein Rahmen 11, an dem eine lenkbare Vorderachse 14 sowie eine ebenfalls lenkbare Hinterachse 15 angeordnet sind, welche bezüglich der Fahrtrichtung R hinter der Vorderachse 14 angeordnet ist. Beide Achsen 14, 15 weisen jeweils zwei bezüglich der Querachse Y nebeneinander angeordnete Räder 13 auf. Jede Achse 14, 15 weist eine Achsschenkellenkung auf, wobei jeweils ein in den Figuren nicht sichtbarer Achsschenkel des jeweiligen Rades 13 über Spurstangen 23, 24 gelenkt wird. Vorderachsen-Spurstangen 23 sind an einen aus Übersichtlichkeitsgründen nicht dargestellten Vorderachsen-Lenkzylinder gekoppelt, während Hinterachsen-Spurstangen 24 mit einem Hinterachsen-Lenkzylinder 43 gekoppelt sind, genauer gesagt mit einer Lenkzylinder-Kolbenstange 43.7 desselben. Während der Feldbearbeitung werden beide Achsen 14, 15 in einem Einzellenkungsmodus betrieben, wobei eine Steuereinheit 45 mittels der jeweiligen Lenkzylinder 43 jede der Achsen 14, 15 situationsbedingt unabhängig voneinander lenken kann.

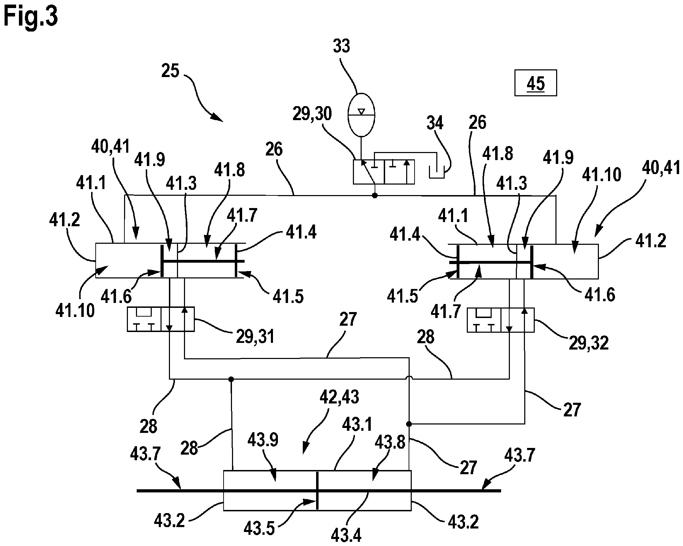

Am Rahmen 11 ist außerdem ein Deichselelement 16 angeordnet, welches um eine parallel zur Hochachse Z verlaufende erste oder hintere Deichselachse A schwenkbar ist. Es ist über eine gelenkig angebundene Deichsel-Spurstange 22 mit einem der Achsschenkel der Vorderachse 14 verbunden. Das Deichselelement 16 bildet zusammen mit einer Deichseleinheit 50, welche nachfolgend noch erläutert wird, einen Teil eines Verbindungssystems 5, über welches die Landmaschine 10 mit einem Zugfahrzeug 1 verbunden werden kann. Während einer Straßenfahrt, bei der die Landmaschine 10 vom Zugfahrzeug 1 gezogen wird, wird die Landmaschine 10 in einem Verzögerungslenkungsmodus betrieben. Dabei wird der Vorderachsen-Lenkzylinder passiv geschaltet und die Lenkung der Vorderachse wird aufgrund der Zwangskopplung über die Deichsel-Spurstange 22 vollständig durch die Auslenkung des Deichselelements 16 bestimmt. An einem bezüglich der Längsachse X rückwärtigen Ende weist das Deichselelement 16 ein Auslöseelement 19 mit zwei beiderseits abragenden Auslösefingern 20 auf. Jeder Auslösefinger 20 ist einem Auslösezylinder 41 zugeordnet, welcher zu einem Auslöseteil 40 einer Übertragungseinrichtung 25 gehört. Die Übertragungseinrichtung 25 dient dazu, Lenkbewegungen der Vorderachse 14 in bestimmter Weise auf die Hinterachse 15 zu übertragen. Beide Auslösezylinder 41 sind um senkrecht verlaufende Auslösezylinder-Schwenkachsen D schwenkbar mit dem Rahmen 11 verbunden. Der Hinterachsen-Lenkzylinder 43 bildet einen Lenkteil 42 der Übertragungsvorrichtung 25. Im Verzögerungslenkungsmodus sind die Auslösezylinder 41 und der Hinterachsen-Lenkzylinder 43 hydraulisch miteinander verbunden, wie anhand des Diagramms in Fig. 3 ersichtlich ist. Jeder Auslösezylinder 41 weist einen Zylinderkörper 41.1 auf, der an einem Ende eine Endwand 41.2 aufweist sowie außerdem eine Trennwand 41.3. Die Trennwand 41.3 wird von einer Auslösezylinder-Kolbenstange 41.7 eines Kolbenelements 41.4 durchquert.

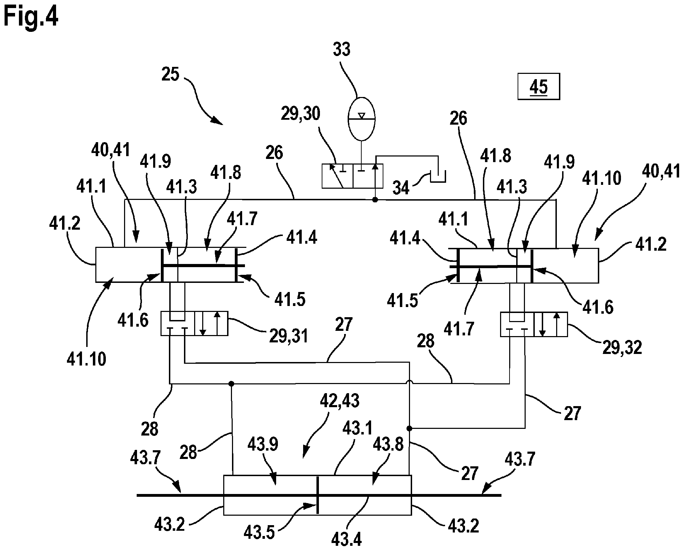

Das Kolbenelement 41.4 weist außerdem zwei Auslösezylinder-Kolbenteile 41.5, 41.6 auf, die durch die Auslösezylinder-Kolbenstange 41.7 starr verbunden sind. Zwischen der Trennwand 41.3 und dem ersten Auslösezylinder Kolbenteil 41.5 ist eine erste Auslösezylinder-Kammer 41.8 ausgebildet, während zwischen der Trennwand 41.3 und dem zweiten Auslösezylinder-Kolbenteil 41.6 eine zweite Auslösezylinder-Kammer 41.9 ausgebildet ist. Zwischen der Endwand 41.2 und dem zweiten Auslösezylinder-Kolbenteil 41.6 ist eine dritte Auslösezylinder-Kammer 41.10 ausgebildet. Die dritten Auslösezylinder-Kammern 41.10 sind mit einem ersten Hydraulikzweig 26 verbunden. Dieser ist im Verzögerungslenkungsmodus durch ein erstes Ventil 30 einer Ventilanordnung 29 mit einem Druckspeicher 33 verbunden. Hierdurch wird ein im Wesentlichen konstanter Hydraulikdruck in den dritten Auslösezylinder-Kammern 41.10 aufrechterhalten. Die erste Auslösezylinder-Kammer 41.8 des in Fig. 3 und 4 linken Auslösezylinders 41 ist über ein zweites Ventil 31 mit einem zweiten Hydraulikzweig 27 verbunden, während die zweite Auslösezylinder-Kammer 41.9 über das zweite Ventil 31 mit einem dritten Hydraulikzweig 28 verbunden ist. In ähnlicher Weise ist die erste Auslösezylinder-Kammer 41.8 des in Fig. 3 und 4 rechten Auslösezylinders 41 über ein drittes Ventil 32 mit dem dritten Hydraulikzweig 28 verbunden, während die zweite Auslösezylinder-Kammer 41.9 über das dritte Ventil 31 mit dem zweiten Hydraulikzweig 27 verbunden ist.

Der Hinterachsen-Lenkzylinder 43 weist einen Zylinderkörper 43.1 auf, der beiderseits durch Endwände 43.2 begrenzt ist. Durch die Endwände 43.2 ist die oben genannte Lenkzylinder-Kolbenstange 43.7 eines Kolbenelements 43.4 hindurchgeführt. Das Kolbenelement 43.4 weist ein starr mit der Lenkzylinder-Kolbenstange 43.7 verbundenes Lenkzylinder-Kolbenteil 43.5 auf. Zwischen Letztgenanntem und jeweils einer der Endwände 43.2 sind eine erste Lenkzylinder-Kammer 43.8 sowie eine zweite Lenkzylinder-Kammer 43.9 definiert. Die erste Lenkzylinder-Kammer 43.8 ist dauerhaft mit dem zweiten Hydraulikzweig 27 verbunden, während die zweite Lenkzylinder-Kammer 43.9 mit dem dritten Hydraulikzweig 28 verbunden ist. Wird das Kolbenelement 41.4 des linken Auslösezylinders 41 in Richtung der Endwand 41.2 ausgelenkt, vergrößert sich das Volumen der zweiten Auslösezylinder-Kammer 41.9, während sich das Volumen der ersten Auslösezylinder-Kammer 41.8 verringert. Dabei wird über den zweiten Hydraulikzweig 27 Hydraulikflüssigkeit verdrängt, während über den dritten Hydraulikzweig 28 Hydraulikflüssigkeit einströmt. Dementsprechend wird das Kolbenelement 43.4 des Hinterachsen-Lenkzylinders 43 bezogen auf Fig. 3 nach links ausgelenkt. In entsprechender Weise führt eine Auslenkung des Kolbenelements 41.4 des rechten Auslösezylinders 41 in Richtung der Endwand 41.2 dazu, dass das Kolbenelement 43.4 des Hinterachsen-Lenkzylinders 43 nach rechts ausgelenkt wird. Solange keine äußere Auslenkung eines der Kolbenelemente 41.3 erfolgt, werden diese aufgrund des Drucks in der dritten Auslösezylinder-Kammer 41.10 in einer Grundposition gehalten, welche auch als Grundposition der Auslösezylinder 41 bezeichnet werden kann. Aufgrund des symmetrischen Aufbaus der Übertragungseinrichtung 25 führt dies dazu, dass der Hinterachsen-Lenkzylinder 43 in einer Neutralposition gehalten wird, die einer Geradeausfahrt entspricht. D. h., solange keines der Kolbenelemente 41.3 der Auslösezylinder 41 aktiv ausgelenkt wird, verbleibt die Hinterachse 15 in einer Geradeausfahrt arretiert, was insbesondere bei hohen Geschwindigkeiten vorteilhaft ist.

Jeder der Auslösefinger 20 ist dazu ausgebildet, auf das Kolbenelement 41.4 eines der Auslösezylinder 41 einzuwirken, genauer gesagt dieses auf Seiten des ersten Auslösezylinder-Kolbenteils 41.5 mit Kraft zu beaufschlagen. Fig. 1 zeigt einen Zustand, bei dem ein Absolutbetrag einer Vorderachsen-Auslenkung der Vorderachse 14 unter einem bestimmten Schwellwert liegt, was insbesondere bei hohen Geschwindigkeiten typisch ist, da das Deichselelement 16 bei diesen Geschwindigkeiten meist nur wenig ausgelenkt wird. Ein Betrag eines Vorderachsen-Lenkwinkels kann zum Beispiel 8° betragen, während der Schwellwert 10° beträgt. Beide Auslösefinger 20 sind dabei außer Kontakt zu den Auslösezylindern 41, weshalb die Hinterachse 15 in ihrer Neutralposition verbleibt. Fig. 2 zeigt einen Zustand, bei welchem der Absolutbetrag der Vorderachsen-Auslenkung über dem Schwellwert liegt. Der Betrag des Vorderachsen-Lenkwinkels kann zum Beispiel 17° betragen. Einer der Auslösefinger 20 kontaktiert den ihm zugeordneten Auslösezylinder 41 und beaufschlagt somit das Kolbenelement 41.3 desselben. Dies führt wie oben beschrieben zu einer Auslenkung des Kolbenelements 43.3 des Hinterachsen-Lenkzylinders 43, wodurch über die Hinterachsen-Spurstangen 24 die Räder 13 der Hinterachse 15 entgegengesetzt zur Vorderachse 14 ausgelenkt werden.

Fig. 4 zeigt die Übertragungseinrichtung im Einzellenkungsmodus. Dabei ist der erste Hydraulikzweig 26 über das erste Ventil 29 mit einem drucklosen Tank 34 verbunden. Außerdem sind die erste Auslösezylinder-Kammer 41.8 und die zweite Auslösezylinder-Kammer 41.9 des linken Auslösezylinders 41 über das zweite Ventil 31 miteinander verbunden und gleichzeitig vom zweiten Hydraulikzweig 27 und vom dritten Hydraulikzweig 28 fluidisch getrennt. In gleicher Weise sind die erste Auslösezylinder-Kammer 41.8 und die zweite Auslösezylinder-Kammer 41.9 des rechten Auslösezylinders 41 über das dritte Ventil 32 miteinander verbunden und gleichzeitig vom zweiten Hydraulikzweig 27 und vom dritten Hydraulikzweig 28 fluidisch getrennt. Somit kann das Kolbenelement 41.4 jedes Auslösezylinders 41 frei verschoben werden und es erfolgt keine hydraulische Kraftübertragung auf den Hinterachsen-Lenkzylinder 43. Dieser kann über zusätzliche, in Fig. 3 und 4 nicht dargestellte Hydraulikleitungen beaufschlagt werden, um die Hinterachse 15 situationsgemäß auszulenken. Das Umschalten zwischen Verzögerungslenkungsmodus und Einzellenkungsmodus kann durch die Steuereinheit 45 erfolgen, ebenso wie die Steuerung der beiden Achsen 14, 15 im Einzellenkungsmodus. Gemäß einer in den Figuren nicht dargestellten Alternative kann jeder der Auslösezylinder 41 um die jeweilige Auslösezylinder-Schwenkachse D verschwenkt werden, so dass er im Einzellenkungsmodus nicht durch das Auslöseelement 19 beaufschlagt werden kann.

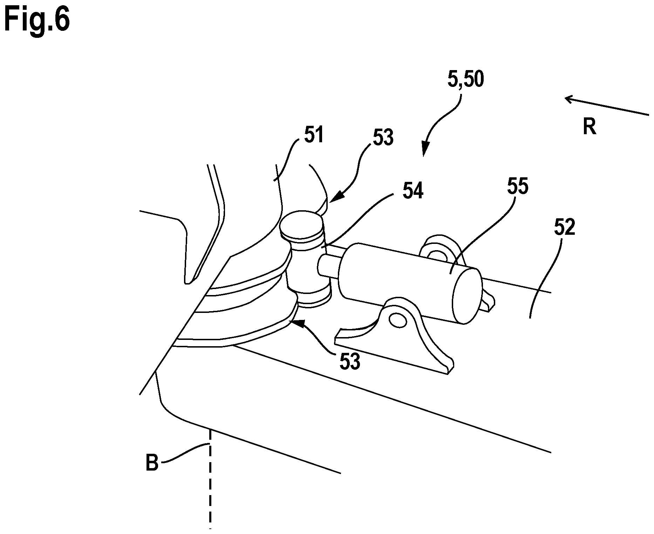

Wie in Fig.5 dargestellt ist, ist die Landmaschine 10 während der Straßenfahrt über das Verbindungssystem 5 mit dem Zugfahrzeug 1 verbunden, das zum Beispiel ein Schlepper sein kann. An dessen Fahrzeugkörper 2 ist ein Dreipunkt-Hubwerk 3 angeordnet. Wie bereits erwähnt, weist das Verbindungssystem 5 eine Deichseleinheit 50 auf. Letztere ist mit einem Abstützteil 51 am Dreipunkt-Hubwerk 3 angekoppelt und daran abgestützt. Ein Schwenkteil 52 ist um eine senkrecht verlaufende zweite oder vordere Deichselachse B schwenkbar mit dem Abstützteil 51 verbunden. Ein Deichselausleger 57 ist um einer waagerecht verlaufende Aufstellachse C mit dem Schwenkteil 52 verbunden. Wie in der Detailansicht in Fig. 6 erkennbar ist, ist am Schwenkteil 52 ein Arretierzylinder 55 angeordnet, mittels dessen ein Arretierelement 54 aus- und einfahrbar ist. Fig. 6 zeigt dabei das Arretierelement 54 in einer ausgefahrenen Position. Das Arretierelement 54 wirkt mit einer positionsfest am Abstützteil 51 befestigten Kurvenbahn 53 zusammen. Deren Profil ist so ausgebildet, dass ein Ausfahren des Arretierelements 54 das Schwenkteil 52 einschließlich des damit verbundenen Deichselauslegers 57 in eine Mittelposition schwenkt und in dieser zurückhält. Dies kann eine vollständige Arretierung bedeuten oder ein elastisches Zurückhalten. In letzterem Fall ist das Schwenkteil 52 zwar durch ein äußeres Drehmoment entgegen eines Rückstellmoments begrenzt aus der Mittelposition auslenkbar, wird aber in Abwesenheit des äußeren Drehmoments wieder in die Mittelposition zurückgestellt. Gemäß einer nicht dargestellten Alternative könnte das Schwenkteil 52 auch mittels eines entsprechenden Aktors aktiv um die vordere Deichselachse B schwenkbar sein. Über den Aktor könnte dann eine beliebige Position, insbesondere die Mittelposition, eingestellt werden. Der Deichselausleger 57 ist mit dem Schwenkteil 52 durch einen Aufstellzylinder 56 verbunden. Fig. 5 zeigt den Aufstellzylinder 56 in ausgefahrener Position, wobei der Deichselausleger 57 in einer Zugposition annähernd waagerecht ausgerichtet ist. Durch Einfahren des Aufstellzylinders 56 kann der Deichselausleger 57 in eine nicht dargestellte, annähernd senkrechte Aufstellposition geschwenkt werden. Diese kann eingestellt werden, wenn das Zugfahrzeug 1 ohne die Landmaschine 10 auf einer Straße fährt. Dabei wird auch das Schwenkteil 52 in die Mittelposition gestellt und in dieser zurückgehalten.

Gemäß einer nicht dargestellten Variante kann der Deichselausleger 57 gegenüber dem Abstützteil 51 um eine weitere Schwenkachse schwenkbar sein, die bevorzugt in einem Winkel von 80° bis 100°, insbesondere 90°, zur Aufstellachse C verläuft und die ebenfalls bevorzugt wenigstens in der Zugposition in einem Winkel zwischen 70° und 100°, insbesondere 80° bis 100°, zur horizontalen Ebene verläuft. Die genannte Schwenkachse kann insbesondere wenigstens in der Zugposition parallel zur Längsachse des Deichselauslegers 57 verlaufen. Hierdurch könnten rotatorische Relativbewegungen um die Längsachse des Zugfahrzeugs 1 und/oder um die Längsachse X der Landmaschine 10 ausgeglichen werden. Um die Schwenkbarkeit zu realisieren, könnte der Abstützteil 51, der Schwenkteil 52 und/oder der Deichselausleger 57 durch zwei gegeneinander schwenkbare Teile ersetzt werden.

Für die Straßenfahrt ist die Deichseleinheit 50 über miteinander zusammenwirkende Kopplungselemente 18, 58, 61 mit dem Deichselelement 16 koppelbar. Wenn der Einsatzort der Landmaschine erreicht wurde, wird die Deichseleinheit 50 entkoppelt und die Landmaschine 10 kann die Feldbearbeitung durchführen. Hierzu kann beispielsweise einen in Fig. 5 stark schematisiert angedeutetes Anbaugerät 8 eingesetzt werden, welches bevorzugt auch bei der Straßenfahrt an den Fahrzeugkörper 12 angekoppelt und vergleichsweise dicht oberhalb des Deichselauslegers 57 angeordnet ist.

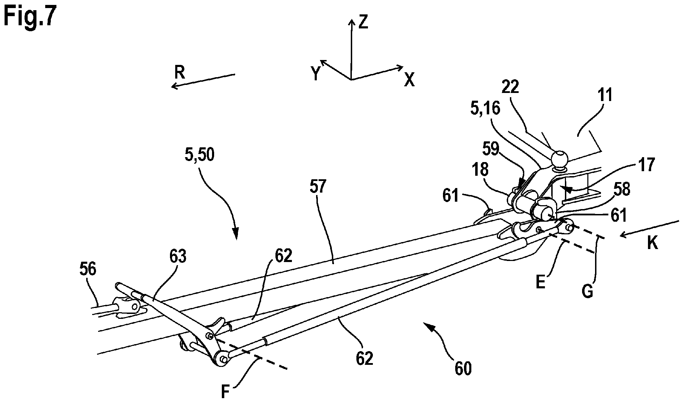

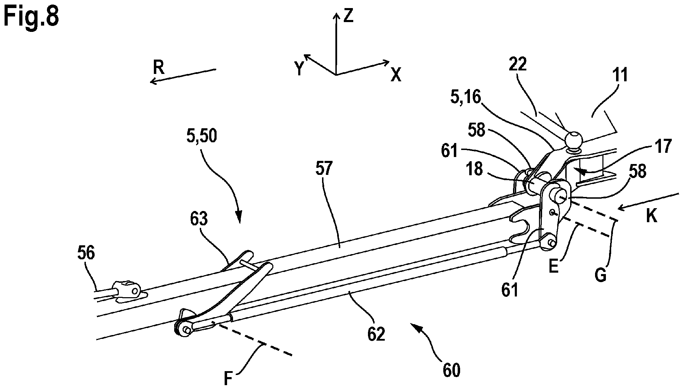

Der Ankopplungsvorgang wird nun mit Bezug auf Fig. 7 und 8 erläutert. Ein zylinderförmiges erstes Anschlag-Kopplungselement 18 ist starr mit dem Deichselelement 16 verbunden. Der Deichselausleger 57 weist endseitig zwei hakenartig ausgebildete zweite Anschlag-Kopplungselemente 58 auf, die dazu ausgebildet sind, das erste Anschlag-Kopplungselement 18 von hinten zu umgreifen, wenn der Deichselausleger 57 und das Deichselelement 16 in einer in Fig.7 und 8 dargestellten Kopplungsposition zueinander angeordnet sind. Zum Ankoppeln werden die zweiten Anschlag-Kopplungselemente 58 zunächst hinter das erste Anschlag-Kopplungselement 18 bewegt. Hierzu kann der Deichselausleger 57 zunächst mittels des Aufstellzylinders 56 gegenüber der Waagerechten leicht abwärts geschwenkt werden, so dass die zweiten Anschlag-Kopplungselemente 58 unter dem ersten Anschlag-Kopplungselement 18 hindurchgeführt werden können, während die Zugmaschine 1 rückwärts fährt. Dann wird der Deichselausleger 57 in die Waagerechte geschwenkt und das Zugfahrzeug 1 kann vorwärtsfahren, wobei sich der Deichselausleger 57 mit den zweiten Anschlag-Kopplungselementen 58 relativ zum Deichselelement 16 entlang einer Kopplungsrichtung K bewegt, die in diesem Fall antiparallel zur Längsachse X verläuft. Die Breite des Deichselelements 16 ist dabei so auf den seitlichen Abstand der zweiten Anschlag-Kopplungselemente 58 abgestimmt, dass es in der Kopplungsposition praktisch spielfrei zwischen ihnen aufgenommen ist. Dabei nimmt die Breite des Deichselelements 16 bezüglich der Querachse Y entlang der Kopplungsrichtung K zu, wobei beiderseits des Deichselelement 16 gegenüber der Kopplungsrichtung K schräg verlaufende erste Führungsflächen 17 ausgebildet sind, die mit durch die zweiten Anschlag-Kopplungselemente 58 gebildeten zweiten Führungsflächen 59 zusammenwirken. Ein zwischen den Führungsflächen 17, 59 definierter Spielraum verringert sich entlang der Kopplungsrichtung, bis er in der Kopplungsposition vernachlässigbar klein ist. Somit ist ein praktisch vollständiger Formschluss bezüglich der Querachse Y gegeben.

Die Kopplung zwischen der Deichseleinheit 50 und dem Deichselelement 16 wird mittels eines Verriegelungsmechanismus 60 abgeschlossen. Dieser weist beiderseits außenseitig der zweiten Anschlag-Kopplungselemente 58 angeordnete Stell-Kopplungselemente 61 auf, die um eine Kopplungselement-Schwenkachse E schwenkbar sind. Sie sind über zwei Koppelstangen 62 mit einem in sich starren Bedienhebel 63 verbunden, der seinerseits wiederum um eine Bedienhebel-Schwenkachse F schwenkbar mit dem Deichselausleger 57 verbunden ist. Jede Koppelstange ist in sich starr ausgebildet und beiderseits schwenkbar angebunden.

Durch Schwenken des Bedienhebels 63 können die Stell-Kopplungselemente 61 aus einer in Fig. 7 dargestellten Freigabeposition in eine in Fig. 8 dargestellte Arretierungsposition geschwenkt werden. In der Arretierungsposition ist das erste Anschlag-Kopplungselement 18 zwischen den zweiten Anschlag-Kopplungselementen 58 und den Stell-Kopplungselementen 61 eingeschlossen, d. h. es besteht ein Formschluss bezüglich der Längsachse X, der Querachse Y und der Hochachse Z. Insbesondere ist die Verbindung auch verdrehsicher bezüglich der Hochachse Z, wodurch Schwenkbewegungen seitens der Deichseleinheit unmittelbar auf das Deichselelement 16 übertragen werden. Der Deichselausleger 57 und das Deichselelement 16 sind somit translatorisch sowie teilweise rotatorisch gegeneinander arretiert. Allerdings bleibt ein rotatorischer Freiheitsgrad erhalten, da der Deichselausleger 57 relativ zum Deichselelement 16 um eine Kopplungs-Schwenkachse G schwenken kann, welche horizontal durch das erste Anschlag-Kopplungselement 18 verläuft. Das Erreichen der Arretierposition der Stell-Kopplungselemente 61 kann auf Seiten des Deichselelements 16 durch einen nicht dargestellten Kopplungssensor registriert werden, worauf hin die Steuereinheit 45 der Landmaschine 10 automatisch vom Einzellenkungsmodus in den für die Straßenfahrt vorgesehenen Verzögerungslenkungsmodus wechseln kann.

Wie in Fig. 5 gut erkennbar ist, sind die Koppelstangen 62 so lang ausgebildet, dass der Bedienhebel 63 bezüglich der Längsachse X noch vor dem Anbaugerät 8 angeordnet ist. Dementsprechend muss ein Benutzer zum Betätigen des Bedienhebels 63 nicht in den beengten Raum unterhalb des Anbaugeräts 8 fassen. Die Länge jeder Koppelstange 62, das heißt der Abstand ihrer Schwenkpunkte, stimmt nicht mit dem Abstand der Kopplungselement-Schwenkachse E von der Bedienhebel-Schwenkachse F überein, sondern ist etwas größer bemessen. Infolgedessen ist ein Schwenken des Bedienhebels 63 nur unter geringfügiger Verformung der beteiligten Bauteile möglich, wobei sich zwischen der in Fig. 7 dargestellten Position und der in Fig. 8 dargestellten Position ein instabiler Punkt ergibt, der durch ein entsprechendes Drehmoment überwunden werden muss. Von dem instabilen Punkt aus kehrt der Bedienhebel 63 ohne äußere Kräfte in die jeweils nächstgelegene Position zurück. Dies sorgt zum einen dafür, dass der Verriegelungsmechanismus 60 in die Arretierungsposition geführt wird, sowie zum anderen, dass er diese nicht ohne nennenswerte äußere Kräfte wieder verlässt.

Optional kann das Verbindungssystems 5 eine Kamera 65 oder einen anderen Sensor aufweisen, mittels dessen ein Fahrer des Zugfahrzeugs 1 den Kopplungsvorgang überwachen kann. In Fig. 5 ist die Kamera stark schematisiert durch eine gestrichelte Linie dargestellt, wobei sie beispielhaft am Deichselausleger 57, in der Nähe des Deichselelements 16, angeordnet ist. Sie könnte aber auch beispielsweise am Schwenkteil 52, am Abstützteil 51 oder sogar am Deichselelement 16 angeordnet sein. In letzterem Fall könnte eine drahtlose Bildübertragung an das Zugfahrzeug 1 erfolgen. Um die Bedienung des Verriegelungsmechanismus 60 weiter zu erleichtern, könnte dieser einen Bedienaktor 64 aufweisen, welcher in Fig. 5 ebenfalls gestrichelt dargestellt ist und einerseits am Deichselausleger 57 sowie andererseits am Bedienhebel 63 ansetzt. In diesem Fall wäre es selbstverständlich auch möglich, den Verriegelungsmechanismus 60 insgesamt umzugestalten, wobei beispielsweise auf die langen Kopplungsstangen 62 verzichtet werden könnte. Der Bedienaktor 64 kann vorteilhaft von der Zugmaschine 1 aus angesteuert werden.

Gemäß einer hier nicht dargestellten alternativen Ausführungsform kann der Verriegelungsmechanismus 60 auch ein als Rastelement ausgebildetes Stell-Kopplungselement 61 aufweisen, das bei Annäherung an die Kopplungsposition zunächst vom ersten Anschlag-Kopplungselement 18 aus einer Ruhelage, die der Arretierungsposition entspricht, elastisch ausgelenkt wird und bei Erreichen der Kopplungsposition in die Ruheposition zurückkehrt, wobei es einen Formschluss mit dem ersten Anschlag-Kopplungselement 18 herstellt.

Eine weitere nicht dargestellte Alternative sieht vor, dass die Kopplungsrichtung K nicht nach vorne, sondern nach hinten in Richtung der Längsachse X weist, wobei die Deichseleinheit 50 in die Kopplungsposition gebracht werden kann, indem das Zugfahrzeug 1 rückwärts an die Landmaschine 10 heranfährt. Dabei könnten gegenüber der Kopplungsrichtung K abgeschrägte Führungsflächen einen Trichter bilden, durch welchen die Deichseleinheit 50 mit dem wenigstens einen zweiten Anschlag-Kopplungselement 58 bei Rückwärtsfahren gewissermaßen automatisch in die Kopplungsposition geführt wird.

## Patentansprüche

1. Landmaschine (10), mit einem Rahmen (11), einer lenkbaren Vorderachse (14), einer lenkbaren Hinterachse (15), einem Auslöseelement (19), das in Abhängigkeit von einer Vorderachsen-Auslenkung der Vorderachse (14) auslenkbar ist, sowie einer Übertragungseinrichtung (25) mit einem Auslöseteil (40) und einem Lenkteil (42), welcher zur Lenkung der Hinterachse (15) eingerichtet ist, wobei in einem Verzögerungslenkungsmodus der Landmaschine (10) das Auslöseelement (19) dazu eingerichtet ist, den Auslöseteil (40) zu beaufschlagen und wenigstens teilweise auszulenken, wenn ein Absolutbetrag der Vorderachsen-Auslenkung einen Schwellwert überschreitet, und die Übertragungseinrichtung (25) dazu eingerichtet ist, infolge der wenigstens teilweisen Auslenkung des Auslöseteils (40) und durch Kraftübertragung vom Auslöseteil (40) zum Lenkteil (42) die Hinterachse (15) entgegengesetzt zur Vorderachse (14) auszulenken.

2. Landmaschine nach Anspruch 1, **dadurch gekennzeichnet, dass** diese ein gegenüber dem Rahmen (11) um eine Deichselachse (A) schwenkbares Deichselelement (16) aufweist, das zur wenigstens indirekten Ankopplung an ein die Landmaschine (10) ziehendes Zugfahrzeug (1) und zur Übertragung einer Zugkraft eingerichtet ist, wobei die Vorderachse (14) im Verzögerungslenkungsmodus durch das Deichselelement (16) zwangsgelenkt ist.

3. Landmaschine nach einem der vorangehenden Ansprüche, **dadurch gekennzeichnet, dass** wenigstens die Vorderachse (14) eine Achsschenkellenkung aufweist, wobei bevorzugt das Deichselelement (16) über eine Deichsel-Spurstange (22) gelenkig mit einem Achsschenkel verbunden ist.

4. Landmaschine nach einem der vorangehenden Ansprüche, **dadurch gekennzeichnet, dass** das Auslöseelement (19) mit dem Deichselelement (16) verbunden ist.

5. Landmaschine nach einem der vorangehenden Ansprüche, **dadurch gekennzeichnet, dass** in einem Einzellenkungsmodus der Landmaschine (10) die Kraftübertragung vom Auslöseteil (40) zum Lenkteil (42) unterbrochen ist.

6. Landmaschine nach einem der vorangehenden Ansprüche, **dadurch gekennzeichnet, dass** der Auslöseteil (40) wenigstens einen Auslösezylinder (41) aufweist und der Lenkteil (42) wenigstens einen Lenkzylinder (43) aufweist, wobei jeder Zylinder (41, 43) einen Zylinderkörper (41.1, 43.1) zur Aufnahme eines Arbeitsfluids aufweist sowie ein demgegenüber verschiebbares Kolbenelement (41.4, 43.4), und wobei im Verzögerungslenkungsmodus wenigstens ein Auslösezylinder (41) fluidisch an wenigstens einen Lenkzylinder (43) gekoppelt ist.

7. Landmaschine nach einem der vorangehenden Ansprüche, **dadurch gekennzeichnet, dass** die Zylinder (41, 43) als Hydraulikzylinder ausgebildet sind.

8. Landmaschine nach einem der vorangehenden Ansprüche, **dadurch gekennzeichnet, dass** das Auslöseelement (19) wenigstens einen Auslösefinger (20) aufweist, der dazu eingerichtet ist, das Kolbenelement (41.4) eines Auslösezylinders (41) zu beaufschlagen und zu verschieben.

9. Landmaschine nach einem der vorangehenden Ansprüche, **dadurch gekennzeichnet, dass** der Auslöseteil (40) zwei Auslösezylinder (41) aufweist, wobei das Auslöseelement (19) dazu eingerichtet ist, in Abhängigkeit von einer Auslenkungsrichtung der Vorderachse (14) jeweils einen Auslösezylinder (41) zu beaufschlagen.

10. Landmaschine nach einem der vorangehenden Ansprüche, **dadurch gekennzeichnet, dass** wenigstens ein Auslösezylinder (41) eine im Zylinderkörper (41.1) angeordnete Trennwand (41.3) aufweist sowie ein Kolbenelement (41.4) mit einem ersten Auslösezylinder-Kolbenteil (41.5) und einem zweiten Auslösezylinder-Kolbenteil (41.6), welche über eine durch die Trennwand (41.3) geführte Auslösezylinder-Kolbenstange (41.7) verbunden sind, wobei eine erste Auslösezylinder-Kammer (41.8) zwischen dem ersten Auslösezylinder-Kolbenteil (41.5) und der Trennwand (41.3) definiert ist und eine zweite Auslösezylinder-Kammer (41.9) zwischen der Trennwand (41.3) und dem zweiten Auslösezylinder-Kolbenteil (41.6) definiert ist und im Verzögerungslenkungsmodus beide Auslösezylinder-Kammern (41.8, 41.9) jeweils fluidisch mit einem Lenkzylinder (43) verbunden sind.

11. Landmaschine nach einem der vorangehenden Ansprüche, **dadurch gekennzeichnet, dass** wenigstens ein Auslösezylinder (41) eine dritte Auslösezylinder-Kammer (41.10) aufweist, die zwischen dem zweiten Auslösezylinder-Kolbenteil (41.6) und einer Endwand (41.2) des Zylinderkörpers (41.1) definiert ist und die im Verzögerungslenkungsmodus mit einem Druckspeicher (33) kommuniziert, wodurch der Auslösezylinder (41) in eine Grundposition rückstellbar ist,

12. Landmaschine nach einem der vorangehenden Ansprüche, **dadurch gekennzeichnet, dass** der Lenkteil (42) einen Lenkzylinder (43) aufweist mit einer ersten Lenkzylinder-Kammer (43.8) und einer zweiten Lenkzylinder-Kammer (43.9), die von der ersten Lenkzylinder-Kammer (43.8) durch ein Lenkzylinder-Kolbenteil (43.5) getrennt ist, welches mit einer Lenkzylinder-Kolbenstange (43.7) verbunden ist, durch deren Auslenkung die Hinterachse (15) auslenkbar ist.

13. Landmaschine nach einem der vorangehenden Ansprüche, **dadurch gekennzeichnet, dass** im Verzögerungslenkungsmodus die erste Auslösezylinder-Kammer (41.8) eines Auslösezylinders (41) und die zweite Auslösezylinder-Kammer (41.9) des anderen Auslösezylinders (41) fluidisch mit der ersten Lenkzylinder-Kammer (43.8) verbunden sind, und die zweite Auslösezylinder-Kammer (41.9) des einen Auslösezylinders (41) und die erste Auslösezylinder-Kammer (41.8) des anderen Auslösezylinders (41) fluidisch mit der zweiten Lenkzylinder-Kammer (43.9) verbunden sind.

14. Lenksystem für eine Landmaschine (10), mit einem Rahmen (11), einer lenkbaren Vorderachse (14), einer lenkbaren Hinterachse (15), einem Auslöseelement (19), das in Abhängigkeit von einer Vorderachsen-Auslenkung der Vorderachse (14) auslenkbar ist, sowie einer Übertragungseinrichtung (25) mit einem Auslöseteil (40) und einem Lenkteil (42), welcher zur Lenkung der Hinterachse (15) eingerichtet ist, wobei in einem Verzögerungslenkungsmodus der Landmaschine (10) das Auslöseelement (19) dazu eingerichtet ist, den Auslöseteil (40) zu beaufschlagen und wenigstens teilweise auszulenken, wenn ein Absolutbetrag der Vorderachsen-Auslenkung einen Schwellwert überschreitet, und die Übertragungseinrichtung (25) dazu eingerichtet ist, infolge der wenigstens teilweisen Auslenkung des Auslöseteils (40) und durch Kraftübertragung vom Auslöseteil (40) zum Lenkteil (42) die Hinterachse (15) entgegengesetzt zur Vorderachse (14) auszulenken.

15. Verfahren zum Lenken einer Landmaschine, mit einem Rahmen (11), einer lenkbaren Vorderachse (14), einer lenkbaren Hinterachse (15), einem Auslöseelement (19), das in Abhängigkeit von einer Vorderachsen-Auslenkung der Vorderachse (14) auslenkbar ist, sowie einer Übertragungseinrichtung (25) mit einem Auslöseteil (40) und einem Lenkteil (42), welcher zur Lenkung der Hinterachse (15) eingerichtet ist, wobei in einem Verzögerungslenkungsmodus der Landmaschine (10) das Auslöseelement (19) den Auslöseteil (40) beaufschlagt und wenigstens teilweise auslenkt, wenn ein Absolutbetrag der Vorderachsen-Auslenkung einen Schwellwert überschreitet, und die Übertragungseinrichtung (25) infolge der wenigstens teilweisen Auslenkung des Auslöseteils (40) und durch Kraftübertragung vom Auslöseteil (40) zum Lenkteil (42) die Hinterachse (15) entgegengesetzt zur Vorderachse (14) auslenkt.
